(19) Europäisches Patentamt

European Patent Office

Office européen des brevets

(11) Veröffentlichungsnummer : **0 404 993 B1**

## (12) EUROPÄISCHE PATENTSCHRIFT

(45) Veröffentlichungstag der Patentschrift :
31.08.94 Patentblatt 94/35

(51) Int. Cl.⁵ : **H02M 3/335**

(21) Anmeldenummer : **89111977.8**

(22) Anmeldetag : **30.06.89**

(54) Gleichstromumrichter mit Strombegrenzung.

(43) Veröffentlichungstag der Anmeldung :
**02.01.91 Patentblatt 91/01**

(45) Bekanntmachung des Hinweises auf die
Patenterteilung :
**31.08.94 Patentblatt 94/35**

(84) Benannte Vertragsstaaten :
**AT BE CH DE ES FR GB GR IT LI NL SE**

(56) Entgegenhaltungen :
DE-B- 2 838 009
FR-A- 2 479 590

(73) Patentinhaber : **SIEMENS
AKTIENGESELLSCHAFT
Wittelsbacherplatz 2
D-80333 München (DE)**

(72) Erfinder : **Niederreiter, Hans, Dipl.-Ing.
Köningswieser 136
D-8000 München 71 (DE)**
Erfinder : **Stolz, Gerhard, Dipl.-Ing. (FH)
Sudetenstrasse 13
D-8034 Germering (DE)**

## Beschreibung

Die Erfindung bezieht sich auf einen wie im Oberbegriff des Patentanspruchs 1 angegebenen Gleichstromumrichter.

Ein derartiger Umrichter ist bereits aus der FR-A-24 79 590 bekannt. Bei dem bekannten Gleichstromumrichter ist in Serie zu einem im Hauptstromkreis angeordneten elektronischen Schalter ein Strommeßwiderstand angeordnet, mit dessen Hilfe Strommeßimpulse gewonnen werden. Der elektronische Schalter ist mit seinem Steuereingang an einen Steuerausgang einer Steuerschaltung angeschlossen. Die Steuerimpulse, die den elektronischen Schalter leitend steuern, werden jeweils durch ein Abschaltsignal beendet.

Zur Begrenzung des im Primärkreis des Gleichstromumrichters fließenden Pulsstromes ist eine erste Vorrichtung zur Strombegrenzung durch Verringerung des Tastgrades der Steuerimpulse sowie eine zweite Vorrichtung zur Strombegrenzung durch Unterdrückung von Steuerimpulsen vorgesehen. Die zweite Anordnung zur Strombegrenzung enthält einen Impulsgenerator, der Vergleichsimpulse erzeugt, die mit der Anstiegsflanke der Strommeßimpulse beginnen und nach einer vorgegebenen Dauer enden sollen. Die Vergleichsimpulse und die Abschaltimpulse werden einem UND-Glied zugeführt. Unterschreitet ein Steuerimpuls eine vorgegebene Dauer, so tritt eine Überlappung von Vergleichsimpuls und zugehörigem Abschaltimpuls ein. In diesem Fall veranlaßt das UND-Glied eine aus einem monostabilen Schaltkreis und einer Torschaltung bestehende Anordnung, während einer durch die Zeitkonstante des monostabilen Schaltkreises gegebenen Dauer Steuerimpulse zu unterdrücken. Die zweite Anordnung zur Strombegrenzung enthält daher eine Anordnung zur Messung der Impulsbreite der im Primärkreis des Gleichstromumrichters fließenden Impulse und eine Vorrichtung zur Unterdrückung von Steuerimpulsen bei Unterschreiten einer vorgegebenen Impulsbreite.

Da bei Erreichen einer vorgegebenen unteren Grenze der Impulsbreite Einschaltimpulse unterdrückt werden, ist es möglich, bereits in einem Betriebszustand auf das Unterdrücken von Einschaltimpulsen überzugehen, in dem die Strombegrenzung noch nicht durch Schaltzeiten des Schalttransistors oder der Steuerschaltung beeinträchtigt ist. Zur Messung der Impulsbreite ist allerdings ein Generator zur Erzeugung von Vergleichsimpulsen erforderlich, der mit einem zusätzlichen Aufwand verbunden ist.

Ferner ist aus der DE-B1-28 38 009 ein Umrichter bekannt, bei dem ein Leistungsschalttransistor durch einen Taktgeber mit Einschaltimpulsen konstanter Arbeitsfrequenz angesteuert wird. Zur Regelung der Ausgangsspannung wird der Tastgrad, das heißt der Quotient der Einschaltzeit des Leistungsschalttransistors zur Periodendauer verändert. Bei Überlast am Ausgang des Gleichstromumrichters wird zum Schutz der Bauteile der Strom im Leistungskreis begrenzt. Dies wird durch eine Verkürzung der Einschaltzeit erreicht. Dabei wird der Schalttransistor mit Hilfe einer Strommeßschaltung gesperrt, so bald der mit Hilfe eines Stromwandlers gemessene Momentanwert des durch den Schalttransistor fließenden Stromes einen vorgegebenen Grenzwert übersteigt.

Da die Speicherzeit des Schalttransistors eine Mindesteinschaltzeit bedingt und diese Mindesteinschaltzeit eine wirtschaftlich nicht vertretbare Überbemessung der Leistungskreis-Bauteile für den Kurzschlußfall erfordern würde, greift bei dem bekannten Umrichter eine weitere Strommeßschaltung, die über eine Diode an die Bürde des Stromwandlers angeschlossen ist ein, wenn die Mindesteinschaltzeit des Schalttransistors unterschritten werden müßte und die Spannung an der Bürde des Stromwandlers daher um mehr als die Schwellenspannung der Diode angestiegen ist. Sie legt - gegebenenfalls wiederholt - Schaltpausen von der Dauer mehrerer Perioden ein, so daß der Strom im Leistungskreis nicht über eine vorgegebene Grenze steigt. Auf diese Weise läßt sich eine weitergehende Strombegrenzung erzielen. Allerdings setzt die zweite Meßschaltung erst ein, nachdem der Strom auf einen Wert angewachsen ist, der deutlich über dem Grenzwert der ersten Meßschaltung liegt.

Aufgabe der Erfindung ist es, einen Gleichstromumrichter der eingangs genannten Art derart auszubilden, daß die Vorrichtung zur Strombegrenzung durch Unterdrückung von Steuerimpulsen des Schalttransistors, die eine Anordnung zur Messung der Impulsbreite der im Primärkreis des Gleichstromumrichters fließenden Impulse enthält, mit vergleichsweise einfach realisierbaren Maßnahmen auskommt.

Gemäß der Erfindung wird der Gleichstromumrichter zur Lösung dieser Aufgabe in der im kennzeichnenden Teil des Patentanspruchs 1 angegebenen Weise ausgebildet.

Die gewünschte Unterdrückung von Einschaltimpulsen in Abhängigkeit von der Impulsbreite kommt in vorteilhafter Weise ohne einen Impulsgenerator zur Erzeugung von mit der Anstiegsflanke der Strommeßimpulse beginnenden Referenzimpulsen aus. Ein weiterer Vorteil besteht darin, daß der Strommeßwiderstand vergleichsweise niederohmig sein kann, da er nicht im Hinblick auf die Erfordernisse eines Generators zur Erzeugung von Vergleichsimpulsen bemessen zu werden braucht, die zeitgleich mit den Stromimpulsen beginnen sollen.

Die Maßnahmen nach Anspruch 2 haben den Vorteil, daß der im Strombegrenzungsmodus befindliche Umrichter bei plötzlichen Kurzschlüssen besonders schnell auf die Unterdrückung der Einschaltimpulse übergeht.

Bei der Weiterbildung nach Anspruch 3 ist der Kondensator über einen weiteren Stromzweig an eine feste Gleichspannung geführt.

Diese Gleichspannung kann insbesondere eine im Umrichter zur Verfügung stehende Hilfsspannung sein.

Bei der Weiterbildung nach Anspruch 5 wird der Anordnung zur Messung der Impulsbreite zusätzlich zu den Einschaltimpulsen des Schalttransistors ein Ausgangssignal der Strommeßschaltung zugeführt. Die Anordnung zur Messung der Impulsbreite ist dabei in vorteilhafter Weise unmittelbar an zwei bereits vorhandene Schaltungspunkte des Umrichters angeschlossen, so daß ein besonderer Zusatzaufwand entfällt. Dabei ist sichergestellt, daß die zweite Anordnung zur Strombegrenzung nur im Überlastfall wirksam ist.

Das nach Anspruch 5 vorgesehene Monoflop hat den Vorteil, daß die Entladezeit des in der Anordnung zur Messung des Tastgrades enthaltenen Kondensators besonders genau eingehalten werden kann. Dieses Monoflop läßt sich nach Anspruch 6 mit besonders geringem Aufwand dadurch realisieren, daß ein bestimmter, bereits vorhandener Komparator durch einen Kondensator zu einer monostabilen Kippstufe ergänzt wird.

Die Erfindung wird anhand der in den Figuren dargestellten Ausführungsbeispiele näher erläutert.

Es zeigen:

Fig. 1    einen Durchflußumrichter mit einer Anordnung zur Messung des Tastgrades,

Fig. 2    eine zweckmäßige Abwandlung des in Fig. 1 gezeigten Gleichstromumrichters und

Fig. 3    ein Spannungs- Stromdiagramm für zwei verschiedene Arten der Strombegrenzung

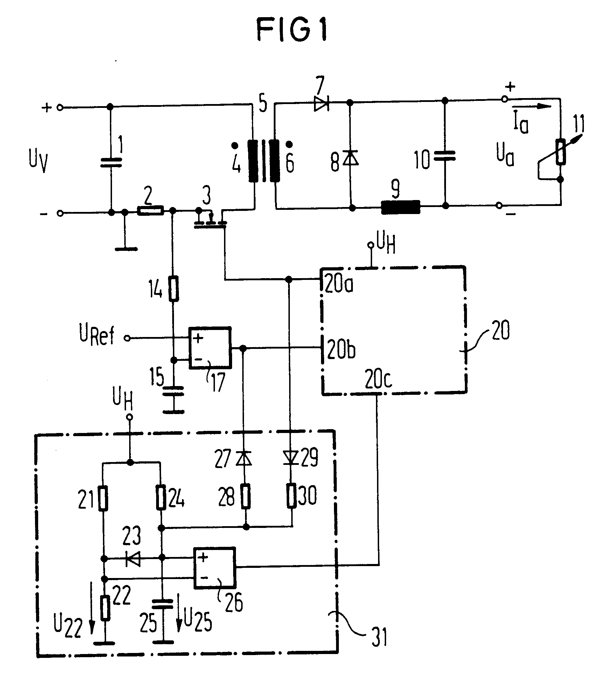

Bei dem in Fig. 1 gezeigten Durchflußumrichter liegt am Eingang der Kondensator 1 und am Ausgang der Kondensator 10. Der Kondensator 1 wird aus einer nicht gezeigten Gleichspannungsquelle mit der Versorgungsspannung $U_V$ gespeist. Am Kondensator 1 liegt die aus der Primärwicklung 4 des Transformators 5, der Drain-Source-Strecke des Feldeffekttransistors 3 und dem Strommeßwiderstand 2 bestehende Serienschaltung.

Der veränderbare Lastwiderstand 11, der Widerstandswerte zwischen 0 und unendlich annehmen kann, ist über die Gleichrichterdiode 7 an die Sekundärwicklung 6 des Transformators 5 angeschlossen. Dabei enthält der Sekundärkreis des Gleichstromumrichters - ausgehend von der Sekundärwicklung 6 - in einem Längszweig die Gleichrichterdiode 7, in einem darauf folgenden Querzweig die Freilaufdiode 8, in einem weiteren Längszweig die Drossel 9 und in einem parallel zum Lastwiderstand 11 angeordneten Querzweig den Kondensator 10.

Der Feldeffekttransistor 3 ist mit seiner Steuerelektrode an den Steuerausgang 20a der Steuerschaltung 20 angeschlossen. Der Strommeßwiderstand 2 ist auf Seiten der Versorungsspannungsquelle mit Bezugspotential verbunden. Zwischen dem anderen Anschluß des Strommeßwiderstandes und Bezugspotential liegt die aus dem Widerstand 14 und dem Kondensator 15 bestehende Serienschaltung. Der Verbindungspunkt des Widerstandes 14 mit dem Kondensator 15 ist an den Minuseingang des Komparators 17 geführt. Der Pluseingang des Komparators 17 liegt an der Referenzspannung $U_{Ref}$. Der Ausgang des Komparators 17 ist an den Steuereingang 20b der Steuerschaltung 20 geführt.

Der Gleichstromumrichter enthält ferner die Vorrichtung 31, mit deren Hilfe die Impulsbreite der dem Feldeffekttransistor 3 zugeführten Steuerimpulse gemessen wird und die bei Unterschreiten eines vorgegebenen unteren Grenzwertes der Impulsbreite ein Sperrsignal an den Sperreingang 20c der Steuerschaltung 20 abgibt.

Die Vorrichtung 31 enthält den einpolig an Bezugspotential liegenden Kondensator 25. Der andere Anschluß des Kondensators 25 ist über den Widerstand 28 und die dazu in Serie liegende Diode 27 an den Ausgang des Komparators 17, über den Widerstand 30 und die dazu in Serie angeordnete Diode 29 an den Steuerausgang 20a der Steuerschaltung 20 und über den Widerstand 24 an die Hilfsspannung $U_H$ geführt.

Die Vorrichtung 31 enthält ferner den Komparator 26, der mit seinem Pluseingang an den gegenüber Bezugspotential Spannung führenden Anschluß des Kondensators 25 und mit seinem Minuseingang an die Referenzspannung $U_{22}$ angeschlossen ist. Die Referenzspannung $U_{22}$ wird mit Hilfe eines zwischen der Hilfsspannung $U_H$ und dem Bezugspotential liegenden, aus den Widerständen 21 und 22 bestehenden Spannungsteilers gewonnen. Zwischen dem Pluseingang und dem Minuseingang des Komparators 26 liegt die Diode 23. Dabei ist die Anode der Diode 23 mit dem Pluseingang des Komparators 26 verbunden.

Der Gleichstromumrichter nach Fig. 1 arbeitet mit konstanter oder näherungsweise konstanter Arbeitsfrequenz im Wechselstromzwischenkreis. Die Ausgangsspannung wird durch den Tastgrad X, d. h. durch das Verhältnis von Einschaltzeit $t_{ein}$ zur Periodendauer T bestimmt.

Somit ist

$$X = t_{ein}/T.$$

Der Ausgangsstrom des Durchflußumrichters ist dem primären Pulsstrom näherungsweise proportional. Bei Überlast wird der Strom zum Schutz der Bauteile und des Verbrauchers begrenzt. Dies wird ab einem definierten Momentanwert des durch den Schalttransistor fließenden Stromes zunächst durch Tastgradverringerung und dann durch Auslassen einzelner oder mehrerer Einschaltimpulse vorgenommen, da die Schaltzeiten des Schalttransistors und der Steuerschaltung und damit die Pulsdauer $t_{ein}$ wegen der endlichen Speicherzeiten nicht beliebig verkleinert werden können. Auf diese Weise kann der Strom auch bei vergleichsweise gutem Wirkungsgrad des Umrichters bei niederohmigern Kurzschluß am Ausgang im gewünschten Umfang begrenzt werden.

Im Strombegrenzungsmodus wird zusätzlich zum Strom auch der Tastgrad gemessen. Unterschreitet dieser einen bestimmten Wert

$$X_O = \frac{t_{ein\,o}}{T},$$

so wird eine mehr oder weniger große Anzahl n von Einschaltzyklen unterdrückt. Dadurch kann bei gleicher Impulsbreite das Verhältnis von Einschalt- und Ausschaltzeit bei unverändertem Grenzwert des Stromes weiter verringert werden. Aus den Schaltpausen ergibt sich ein fiktiver Tastgrad

$$X = \frac{t_{ein\,o}}{n\,T} = X_{O/n}.$$

Der Tastgrad des Steuersignals für den Schalttransistor 3 wird im Strombegrenzungsmodus in eine proportionale Spannung am Kondensator 25 umgesetzt. Der Kondensator 25 wird hierzu während der Einschaltzeit $t_{ein}$ mit einem annähernd konstanten Strom geladen und anschließend für eine konstante Zeit $t_E$ mit definiertem Strom entladen.

Die Spannung am Kondensator 25 ist damit nur von der Impulsdauer $t_{ein}$ der Einschaltimpulse abhängig. Unterschreitet die Einschaltzeit $t_{ein}$ und damit die Spannung $U_{25}$ einen vorgegebenen Wert, werden über den Komparator 26 Einschaltimpulse unterdrückt. Während dieser Zeit, sowie während des ersten Anlaufs der Schaltung muß der Kondensator 25 über einen weiteren Stromweg langsam aufgeladen werden.

Beim Einschalten des Gerätes wird der Kondensator 25 aus einer Gleichspannungsquelle, die die Hilfsspannung $U_H$ abgibt, über den Widerstand 24 aufgeladen. Die Ansteuerung wird über den Komparator 26 freigegeben, wenn die Spannung $U_{25}$ am Kondensator 25 mindestens so groß wie die Spannung $U_{22}$ am Widerstand 22 ist, das heißt für den Fall, daß $U_{25} \cong U_{22}$ ist.

Der Kondensator 25 wird bei Eingriff des üblichen Strombegrenzungs-Komparators 17 im Überlastfall von diesem während einer kurzen Zeit über den Widerstand 28 und die Diode 27 teilweise entladen und über die Diode 29 und den Widerstand 30 vom Gatesignal des Feldeffekttransistors 3 sowie über den Widerstand 24 aus der die Hilfsspannung $U_H$ liefernden Hilfsspannungsquelle wieder geladen. Dabei fällt seine Spannung $U_{25}$ mit dem Tastgrad des Umrichters. Unterschreitet die Spannung $U_{25}$ die Vergleichsspannung $U_{22}$, so sperrt der Komparator 26 solange den Umrichter, bis der Kondensator 25 über den Widerstand 24 wieder auf eine Spannung über der Vergleichsspannung $U_{22}$ aufgeladen ist. Die Entladezeit $t_E$ des Kondensators 25 ist näherungsweise konstant, da der Komparator 17 nach dem- Ansprechen wegen seiner eigenen Speicherzeiten und der des Schalttransistors 3 für eine bestimmte Zeit durchgeschaltet bleibt.

Die Ladezeit aus dem Gatesignal entspricht der Einschaltdauer des Feldeffekttransistors 3, während über den vergleichsweise hochomigen Widerstand 24 dauernd geladen wird.

Um ein schnelles Ansprechen der Schaltung beim plötzlichen Kurzschluß zu ermöglichen, wird die Spannung $U_{25}$ auf eine Spannung, die nicht wesentlich über der Vergleichsspannung $U_{22}$ liegt gehalten. Dies geschieht mit Hilfe der Diode 23.

Zur Kompensation des Einflusses der Hilfsspannung $U_H$ auf die Kondensatorspannung $U_{25}$ wird die Vergleichsspannung $U_{22}$ über den aus den Widerständen 21 und 22 bestehenden Spannungsteiler ebenfalls aus der Hilfsspannung $U_H$ gewonnen.

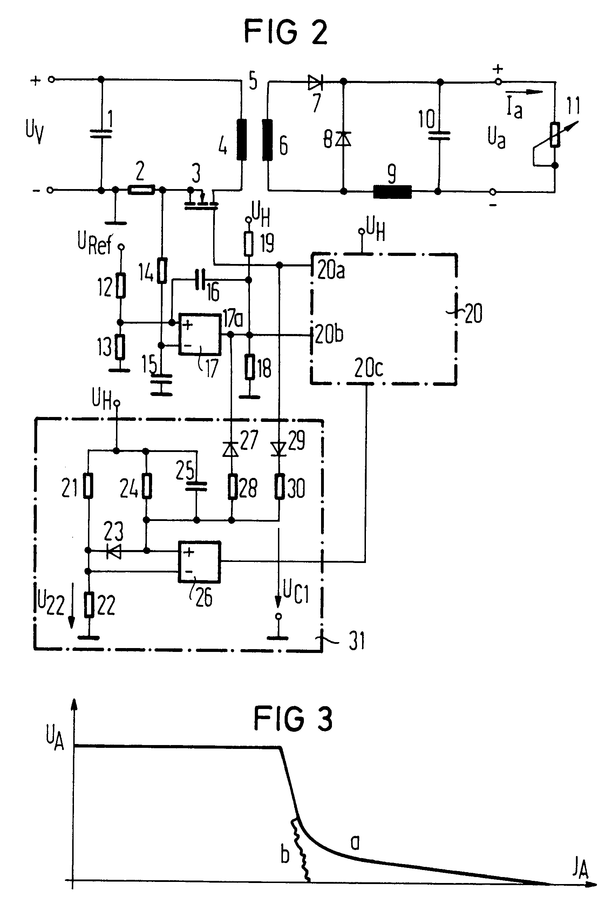

Der Gleichstromumrichter nach Fig. 2 unterscheidet sich von dem nach Fig. 1 dadurch, daß der Komparator 17 durch den zwischen seinem Ausgang und seinem Pluseingang liegenden Kondensator 16 zu einer monostabilen Kippstufe ergänzt ist und daß der Kondensator 25 anstatt zwischen dem Pluseingang des Komparators 26 und Bezugspotential zwischen dem Pluseingang und der Hilfsspannung $U_H$ angeordnet ist.

Die Ergänzung des Komparators 17 zu einer monostabilen Kippschaltung bewirkt eine besonders genaue Einhaltung der Entladezeit des Kondensators 25. Die Anordnung des Kondensators 25 parallel zum Widerstand 24, das heißt zwischen dem Pluseingang des Komparators 26 und der Hilfsspannung $U_H$ bewirkt, daß die Verzögerung beim Einschalten des Gerätes entfällt.

Die anhand eines Durchflußumrichters beschriebene Art der Strombegrenzung kann in entsprechender Weise auch bei anderen getakteten Stromversorgungen, insbesondere bei Sperrumrichtern vorteilhaft verwendet werden. Bei der Verwendung in Gegentaktschaltungen wird der Stromsensor insbesondere in einem Stromzweig angeordnet, der beiden Schaltungshälften gemeinsam ist.

# EP 0 404 993 B1

**Patentansprüche**

1. Gleichstromumrichter mit einem im Hauptstromkreis angeordneten elektronischen Schalter (3) und mit einem in Serie zum elektronischen Schalter (3) angeordneten Strommeßwiderstand (2) einer Strommeßschaltung (2, 14, 15, 17), wobei der elektronische Schalter (3) mit seinem Steuereingang an einen Steuerausgang (20a) einer Steuerschaltung (20) angeschlossen ist, die Steuerimpulse insbesondere konstanter Folgefrequenz abgibt, mit Begrenzung des im Primärkreis des Gleichstromumrichters fließenden Pulsstromes mittels einer ersten Anordnung zur Strombegrenzung durch Verringerung des Tastgrades der Steuerimpulse und mit einer zweiten Anordnung (31) zur Strombegrenzung durch Unterdrückung von Steuerimpulsen, wobei

   die zweite Anordnung (31) zur Strombegrenzung eine Anordnung zur Messung der Impulsbreite der im Primärkreis des Gleichstromumrichters fließenden Impulse enthält und die Steuerschaltung (20) durch die zweite Anordnung (31) zur Strombegrenzung derart steuerbar ist, daß die Unterdrückung von Steuerimpulsen bei Unterschreiten einer vorgegebenen Impulsbreite ausgelöst wird,

   **dadurch gekennzeichnet,**

   daß die Anordnung zur Messung der Impulsbreite einen Kondensator (25) enthält, der während der Einschaltzeit des elektronischen Schalters (3) aus einer ersten Spannungsquelle über einen ersten Stromzweig (29, 30) mit einem Strom erster Richtung und während einer innerhalb der Sperrzeit des elektronischen Schalters (3) liegenden Zeitspanne konstanter Dauer aus einer zweiten Spannungsquelle über einen zweiten Stromzweig (27, 28) mit einem Strom dazu entgegengesetzter Richtung speisbar ist und daß ein Komparator (26), der die Spannung des Kondensators (25) mit einer Referenzspannung $U_{22}$ vergleicht, mit seinem Ausgang an einen Sperreingang (20c) der Steuerschaltung (20) geführt ist.

2. Gleichstromumrichter nach Anspruch 1,

   **dadurch gekennzeichnet,**

   daß zwischen den Eingängen des Komparators (26) eine Diode (23) angeordnet ist, deren Anode mit dem nicht invertierenden Eingang (+) des Komparators (26) verbunden ist.

3. Gleichstromumrichter nach einem der Ansprüche 1 bis 2,

   **dadurch gekennzeichnet,**

   daß der Kondensator (25) über einen weiteren Stromzweig (24) an ein festes Potential ($U_H$) geführt ist.

4. Gleichstromumrichter nach einem der Ansprüche 1 bis 3,

   **dadurch gekennzeichnet,**

   daß die erste Spannungsquelle durch den Steuerausgang (20a) der Steuerschaltung (20) und die zweite Spannungsquelle durch den Ausgang (17a) der Strommeßschaltung gebildet ist.

5. Gleichstromumrichter nach einem der Ansprüche 1 bis 4,

   **dadurch gekennzeichnet,**

   daß dem zweiten Stromzweig (27, 28) ein Monoflop (16, 17) vorgeschaltet ist.

6. Gleichstromumrichter nach Anspruch 5,

   **dadurch gekennzeichnet,**

   daß der erste Komparator (17) als Monoflop (16, 17) ausgebildet ist.

**Claims**

1. DC converter having an electronic switch (3), which is arranged in the main circuit, and having a current measuring resistor (2), which is arranged in series with the electronic switch (3), of a current measuring circuit (2, 14, 15, 17), the electronic switch (3) being connected with its control input to a control output (20a) of a control circuit (20), which emits control pulses at a preferably constant repetition rate, limiting the pulse current, flowing in the primary circuit of the DC converter by means of a first arrangement for current limiting by reducing the duty ratio of the control pulses, and having a second arrangement (31) for current limiting by suppressing the control pulses, the second arrangement (31) for current limiting containing an arrangement for measuring the pulse width of the pulses flowing in the primary circuit of the DC converter, and the control circuit (20) being controllable by the second arrangement (31) for current limiting, in such a manner that the suppression of control pulses is triggered in the case of a predetermined

5

pulse width being undershot, characterized in that the arrangement for measuring the pulse width contains a capacitor (25), which can be supplied from a first voltage source via a first current branch (29, 30) with a current in a first direction during the turn-on time of the electronic switch (3), and from a second voltage source via a second current branch (27, 28) with a current in the opposite direction thereto during a time interval of constant length, which is within the off-time of the electronic switch (3), and in that a comparator (26), which compares the voltage of the capacitor (25) with a reference voltage $U_{22}$, is routed by means of its output to an inhibit input (20c) of the control circuit (20).

2. DC converter according to Claim 1, characterized in that a diode (23) is arranged between the inputs of the comparator (26), the anode of which diode is connected to the non-inverting input (+) of the comparator (26).

3. DC converter according to one of Claims 1 or 2, characterized in that the capacitor (25) is connected to a fixed potential ($U_H$) via a further current branch (24).

4. DC converter according to one of Claims 1 to 3, characterized in that the first voltage source is formed by the control output (20a) of the control circuit (20) and the second voltage source by the output (17a) of the current measuring circuit.

5. DC converter according to one of Claims 1 to 4, characterized in that a monostable multivibrator (16, 17) is connected upstream of the second current branch (27, 28).

6. DC converter according to Claim 5, characterized in that the first comparator (17) is formed as a monostable multivibrator (16, 17).

## Revendications

1. Convertisseur de courant continu, comportant un interrupteur (3) électronique dans le circuit principal et une résistance (2) de mesure de courant d'un circuit (2, 14, 15, 17) de mesure de courant, montée en série avec l'interrupteur (3) électronique, ce dernier étant relié par son entrée de commande à une sortie de commande (20a), d'un circuit de commande (20), qui envoie des impulsions de commande ayant notamment une fréquence de répétition constante, le courant impulsionnel qui passe dans le circuit primaire du convertisseur de courant continu étant limité au moyen d'un premier montage de limitation du courant, par diminution du facteur de durée de l'impulsion de commande, et au moyen d'un second montage (31) destiné à limiter le courant par suppression d'impulsions de commande, le second montage (31) destiné à limiter le courant comportant un montage mesurant la largeur des impulsions passant dans le circuit primaire du convertisseur de courant continu et le circuit de commande (20) pouvant être commandé par le second montage (31) destiné à limiter le courant, de manière à déclencher la suppression d'impulsions de commande lorsque la largeur d'impulsion devient inférieure à une valeur prescrite, caractérisé en ce que, le montage destiné à mesurer la largeur d'impulsion comporte un condensateur (25), qui pendant la durée où l'interrupteur (3) électronique est conducteur, peut être alimenté à travers une première branche (29, 30) en un courant d'un premier sens par une première source de tension et qui, pendant un laps de temps de durée constante compris dans la durée de blocage de l'interrupteur (3), peut être alimenté à travers une seconde branche (27, 28) en un courant de sens opposé, par une seconde source de tension, et un comparateur (26), qui compare la tension du condensateur (25) à une tension $U_{22}$ de référence, est relié par sa sortie à une entrée (20c) de blocage du circuit de commande (20).

2. Convertisseur de courant continu suivant la revendication 1, caractérisé en ce que, entre les entrées du comparateur (26) est montée une diode (23) dont l'anode est connectée à l'entrée non invariante (+) du comparateur (26).

3. Convertisseur de courant continu suivant l'une des revendications 1 ou 2, caractérisé en ce que, le condensateur (25) est mis à un potentiel ($U_H$) fixe par une autre branche (24).

4. Convertisseur de courant continu suivant l'une des revendications 1 à 3,

caractérisé en ce que,
la première source de tension est la sortie (20a) de commande du circuit de commande (20) et la seconde source de tension est la sortie (17a) du circuit de mesure du courant.

5. Convertisseur de courant continu suivant l'une des revendications 1 à 4,
caractérisé en ce que,
une bascule monostable (16, 17) est branchée en amont de la seconde branche (27, 28).

6. Convertisseur de courant continu suivant la revendication 5,
caractérisé en ce que,
le premier comparateur (17) est sous la forme d'une bascule monostable (16, 17).

# FIG 1

# FIG 2

# FIG 3